# EUROPEAN PATENT SPECIFICATION

(11) **EP 0 834 023 B1**
(45) Date of publication and mention of the grant of the patent: **29.10.2003**
(21) Application number: 96921207.5
(22) Date of filing: 21.06.1996
(51) Int. Cl.: F16C 3/04, F16C 9/00

(54) **CONNECTING-ROD BEARING WITH ECCENTRIC AND COILED SPRING SYSTEM**
PLEUELLAGER MIT EINEM EXZENTER-UND SCHRAUBFEDERMECHANISMUS
BIELLE AVEC UN EXCENTRIQUE ET RESSORT HELICO DAL

(30) Priority: 22.06.1995 TR 74295
(43) Date of publication of application: 08.04.1998
(73) Proprietor: Hasan Basri Ozdamar, Kayseri (TR)
(72) Inventor: Hasan Basri Ozdamar, Kayseri (TR)
(74) Representative: LOUIS- PÖHLAU- LOHRENTZ
(86) International application number: TR9600002
(87) International publication number: WO97001042

(56) References cited:
- DE-C- 812 490
- US-A- 1 312 585
- US-A- 3 021 825
- US-A- 3 985 114
- US-A- 3 998 200
- SOVIET INVENTIONS ILLUSTRATED, sections Q, week 8344, 14 December 1983, DERWENT PUBLICATIONS LTD., LONDON, Q62; & SU,A,985 492 (BELORUSSIAN POLY).

## Description

The invention is related to the internal and external combustion engines with pistons including those with sparkplug ignition.

More particularly, this invention is related to such an engine comprising a coiled spring system utilizing at a high level, the pressure created within the cylinder that extends the momentum arm on the crank, for external and internal combustion engines with pistons including those with spark-plug ignition.

### Problem to be solved by the Invention

The diameter of rotation of the crank axle journal is equal to the piston course in common traditional engines.

Document US-A-3 998 200 discloses an internal combustion engine comprising substantially a cylinder, a piston in said cylinder having a piston stroke, a crankshaft journal, connecting rods interconnecting said piston and said crankshaft, wherein the path of the rods is defined by arrangement of cams and levers including a coil spring, parts of the rods acting as spring winding arms, the rotational diameter of the crankshaft journal being in excess of the piston stroke.

In view of US-A- 3 998 200 the invention solves the problem to provide an simplified engine more similar to common conventional engines.

In a common traditional engine, the piston, connecting-rod and the crank are mounted directly to each other and the rotation diameter of crank axle journal is equal to the piston course.

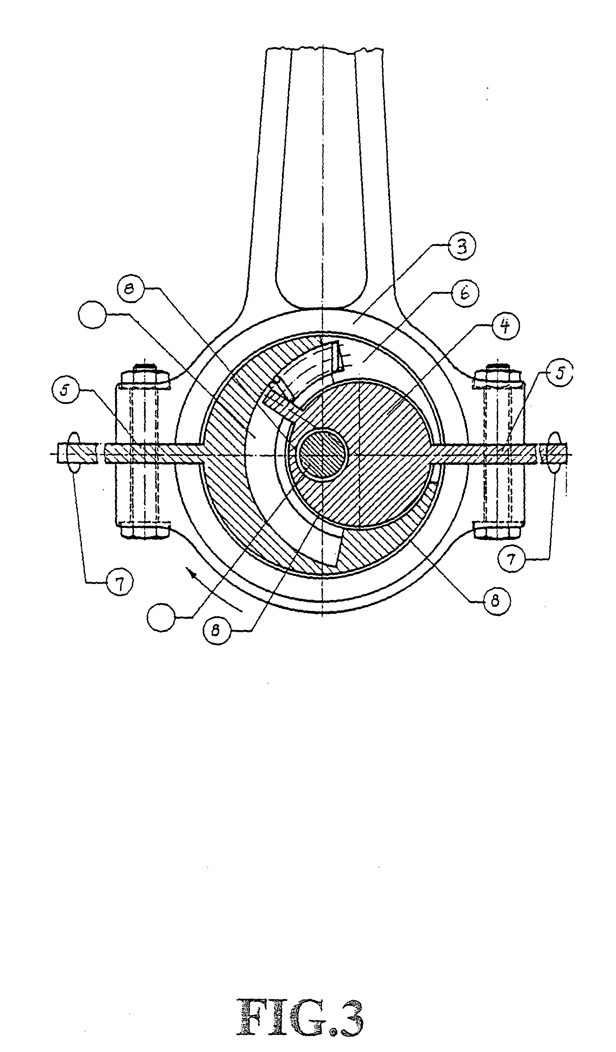

In the system of our invention, there exists a system consisting of a pair of cams operating with coiled spring, between the connecting rod and the crank axle journal or pully block, as shown in Figure 3. In this system the connecting rod tries to rotate the crank axle journal with more pressure. Besides, since the gyration radius of the crank axle journal or pulley block will increase the momentum arm also increases and therefore a greater torque and power is provided with a higher rotating power and longer momentum arm.

### Detailed Explanation of the Drawings

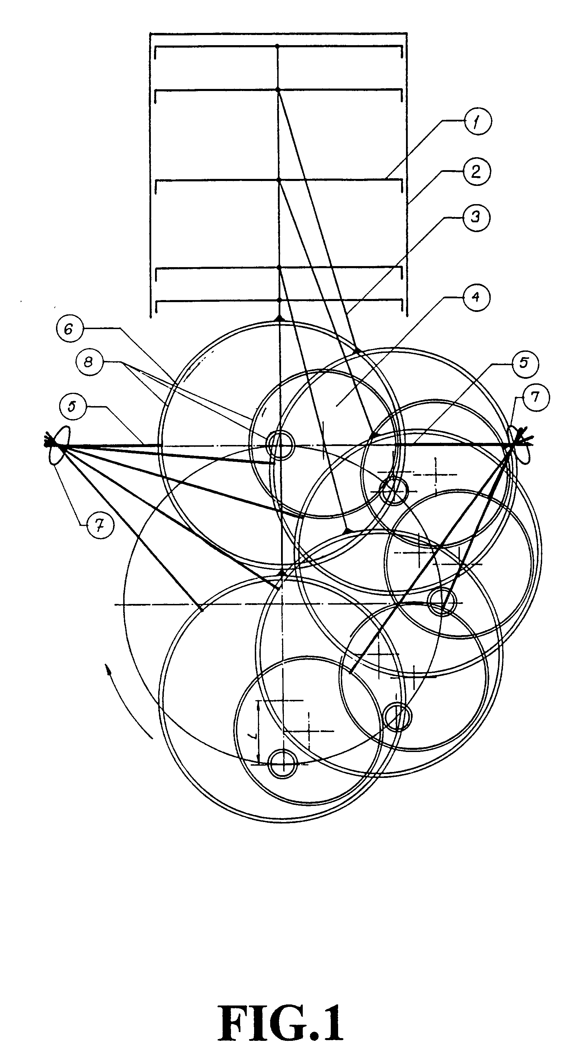

Figure 1 shows at a 180° rotation circle of an engine according to the invention the crank axle journal angle is assumed to be 0°, while both internal and external eccentric cams are at the upper dead point the positions of coiled spring arms of internal and external cams at connecting rod and piston 45°-90°-135° and 180° are shown separately.

In Figure 1 the parts are shown with the following numerals:

| |
|---|
| Part No. Item |
| 1 Piston |
| 2 Cylinder |
| 3 Connecting rod |
| 4 Internal eccentric (cam) |
| 5 Spring coiling (loading) arm |
| 6 External eccentric (cam) |
| 7 Spring hangers |
| 8 Oil gaps |
| L Acquired useful diameter increase |

Figure 2 shows the position of the internal and external eccentrics of piston at 0° - 90° and 180 ° angles (when the piston is on the upper dead position the accepted angle is 0°, the position of the spring and also the displacement of the center of connecting rod rotating the crank axle journal. This provides a supplement like "L" for the rotation diameter of the crank axle journal at 180° position.

In this figure numeral 9 is the joining spring.

Figure 3 is the diagram which shows the crank shaft, connecting rod, internal and external eccentrics, joining arms (spring arms) loads of joining arms and joining springs are on the upper dead position and the spring is at the joining position.

Figure 4 is the diagram which explains the transformation of energy consumed for winding the spring into a useful form.

### Detailed Description of the Invention

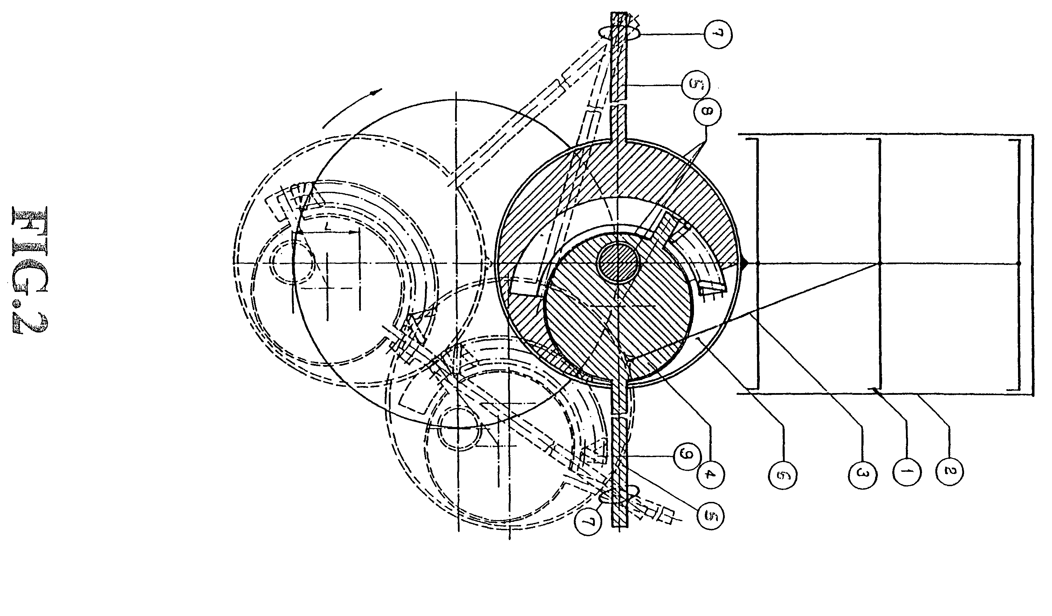

The spring system which may be hydraulic, mechanical or electrical) taking advantage of the fuel exploding within the cylinder which extends the momentum arm, in the internal and external combustion engines with piston, operates as being assembled on the crank, connecting rod or piston. Figures 2 and 3 show the inner structure of the crank shaft connecting rod on the crank.

In the internal and external combustion engines with piston including those with spark-plug ignition, the said spring system takes advantage at a maximum level of the pressure provided in the cylinder which extends the momentum arm and with this characteristic of the spring system, a greater rotation radius is obtained that of the crank journal in another engine on the same course. Thus, the momentum arm is also increased , the two eccentric parts on the crank shaft are seen in Figure 3; over these parts the connecting rod is placed. The parts (5) supported by the bearings (7) load the spring within the eccentric while the piston ascends towards the dead point; as the piston reaches this point the spring is completely loaded.

Position No. 1 in Figure 2: while the piston descends towards lower dead point, the springs starts to unwind and the eccentrics within the connecting rod rotate in opposite directions and push the connecting rod upward, while the pressure of the exploded gas in the cylinder pushes it down, and these two forces combine in order to rotate the crank.

Position No. 3 in Figure 2 when the piston is at lower dead point, the spring will be completely unwound and the eccentric will hold the connecting rod at a raised position with "L" distance.

While a typical engine course is expected to be equal to the rotation diameter, this engine according to the invention increases the rotation diameter with an amount of "L" at the same course.

This difference of diameter ("L" distance) advantageously increases the rotation diameter of the crank axle journal of the crank and thus the crank axle journal is produced so as to rotate with a larger diameter. Since the momentum arm rotating the crank gets bigger, a rotation momentum greater than that of a traditional engine of a similar course is applied.

In addition, as the piston of the present invention remains at an upper position in the cylinder with respect to a traditional engine, the pressure coming over the piston is higher and thus the force rotating the crank shaft is larger. A bigger rotation momentum is obtained as the pressure and momentum arms are also increased.

While completing the cycle of the crank, the spring within the eccentrics mounted on the crank shaft is coiled by means of spring hangers. The force spent to wind the spring is at least partialy recovered in order to rotate the crank. One of the most important advantages of this system is the increasing of the rotation diameter of the crank axle journal without changing the cylinder course; thus extending the momentum arm and having a high pressure since the piscon remains at an upper position and thus by means of high pressure and a big momentum arm, increasing the torque and force.

It is also possible to transfer at least a part of the energy consumed to wind the spring into a useful form so that the cylinder may be designed to provide high air charge in order to pump the air into it.

Thus the compression ratio may be modified in such a manner that the pressure within the cylinder shall be high enough after explosion.

This spring system may also be applied outside the crank as well as inside it. For instance, connected rod may be constructed of two parts fitting into each other and a spring coiled while fitting these two parts. The windings and unwinding of the spring is controlled by supplementary means, i.e. desired rotation is provided by directing guides. For instance, buffers may be placed on the connecting rod, spring hangers etc. to prevent the piston from hitting towards the dead point. Further, the same advantageous system may be provided by hydraulic, mechanical and electro magnetic systems and the rotation diameter of crank journal may be increased while the piston course (stroke) remains constant or changes insignificantly. This provides with great advantageous besides the torque and force increase. However, one of the most important issues is the fact that a suitable spring selection is performed by calculating the force of the spring between interior and exterior eccentrics with respect to the construction and position of the location where this force is applied. Thus selection of the spring is made depending on the construction. The spring may be in such forms as helical, spiral or leaf spring.

## Claims

1. An internal or external combustion engine comprising: a cylinder (2), a piston (1) in said cylinder (2) having a piston stroke, a crankshaft journal, a connecting rod (3) interconnecting said piston (1) and said crankshaft journal, by means of an exterior eccentric (6) coupled to said connecting rod (3), and an interior eccentric (4) fitted into said exterior eccentric (6), forming oil gaps (8) between the interior and exterior eccentrics (4, 6), said interior eccentric (4) carrying said crankshaft journal, a coil spring (9) acting between said eccentrics (6, 4) within a spring movement channel, and spring winding arms (5) coupled to said exterior and interior eccentrics (6, 4); said coil spring (9) biasing said eccentrics (6, 4) and said spring winding arms (5) being supported in spring winding arm (5) bearings winding said spring (9) in response to reciprocating movement of said piston (1) within said cylinder (2) so that the rotational diameter of the crankshaft journal is in excess (L) of the piston stroke.

2. An engine according to claim 1 wherein, upon ascending movement of the piston (1) within the cylinder (2) towards an upper dead center position, the spring winding arms (5) increase the force of the spring (9) between said interior and exterior (4, 6) eccentrics, and upon descending movement of the piston (1) within the cylinder (2) towards a lower dead center position, the force of the spring (9) decreases between said eccentrics (4, 6).

3. An engine according to claim 2 wherein said spring (9), said spring winding arms (5) and said eccentrics (4, 6) cooperate with one another to exert an ascending force on said piston (1) as expansion within the cylinder (2) displaces the piston (1) downwardly to rotate the crankshaft.

## Patentansprüche

1. Kraftmaschine mit innerer oder äußerer Verbrennung, die einen Zylinder (2), einen Kolben (1) in dem Zylinder (2), der einen Kolbenhub besitzt, einen Kurbelzapfen, eine Verbindungsstange (3), die den Kolben (1) und den Kurbelzapfen mittels eines äußeren Exzenters (6), der mit der Verbindungsstange (3) verbunden ist, und eines inneren Exzenters (4), der in den äußeren Exzenter (6) eingesetzt ist, wodurch zwischen dem inneren und dem äußeren Exzenter (4, 6) Ölspalte (8) gebildet werden, verbindet, wobei der innere Exzenter den Kurbelzapfen trägt, eine Schraubenfeder (9), die zwischen den Exzentern (6, 4) in einem Federbewegungskanal wirkt; und Federwicklungsarme (5), die mit dem äußeren und dem inneren Exzenter (6, 4) gekoppelt ist, umfaßt; wobei die Schraubenfeder (9) die Exzenter (6, 4) vorbelastet und die Federwicklungsarme (5) in Lagern für die Federwicklungsarme (5) unterstützt sind und die Feder (9) in Reaktion auf eine Hin- und Herbewegung des Kolbens (1) in dem Zylinder (2) aufwinden, so daß der rotatorische Durchmesser des Kurbelzapfens den Kolbenhub übersteigt (L).

2. Kraftmaschine nach Anspruch 1, bei der bei der Aufwärtsbewegung des Kolbens (1) im Zylinder (2) in eine obere Totpunktposition die Federwindungsarme (5) die Kraft der Feder (9) zwischen dem inneren und dem äußeren Exzenter (4, 6) erhöhen und bei einer Abwärtsbewegung des Kolbens (1) im Zylinder (2) in eine untere Totpunktposition die Kraft der Feder (9) zwischen den Exzentern (4, 6) abnimmt.

3. Kraftmaschine nach Anspruch 2, bei der die Feder (9), die Federwindungsarme (5) und die Exzenter (4, 6) zusammenwirken, um auf den Kolben (1) eine Aufwärtskraft auszuüben, wenn die Expansion im Zylinder (2) den Kolben (1) nach unten bewegt, um die Kurbelwelle zu drehen.

## Revendications

1. Un moteur à combustion interne ou externe comprenant un cylindre (2), un piston (1) dans ledit cylindre (2), ayant une course de piston, un vilebrequin, une bielle (3) reliant ensemble ledit piston (1) et ledit vilebrequin, au moyen d'un excentrique extérieur (6) couplé à ladite bielle (3) et d'un excentrique intérieur (4) monté dans ledit excentrique extérieur (6), en créant des puits de lubrification (8) entre les excentriques extérieur et intérieur (6, 4), ledit excentrique intérieur (4) portant ledit vilebrequin, un ressort hélicoïdal (9) agissant entre lesdits excentriques (6, 4) à l'intérieur du canal de déplacement de ressort et dès bras d'enroulement de ressort (5) couplés auxdits excentriques extérieur et intérieur (6, 4), ledit ressort hélicoïdal (9)) repoussant lesdits excentriques (6, 4) et lesdits bras d'enroulement de ressort (5) étant supportés dans des paliers de bras d'enroulement de ressort (5), l'enroulement desdits ressorts (9) sous l'action du déplacement de va-et-vient dudit piston (1) à l'intérieur dudit cylindre (2) se faisant de telle sorte que le diamètre rotatif dudit cylindre soit supérieur (6) à la barre du piston.

2. Un moteur selon la revendication 1, dans lequel lors du déplacement vers le haut du piston (1) à l'intérieur du cylindre (2) vers une position de point mort supérieur, les bras d'enroulement de ressort (5) augmentent la force du ressort (8) entre lesdits excentriques intérieur et extérieur (4, 6) et lors du déplacement vers le bas du piston (1) à l'intérieur du cylindre (2) vers une position de point mort inférieur, la force du ressort (9) diminue entre les excentriques.

3. Un moteur selon la revendication 2, dans lequel ledit ressort (9), lesdits bras d'enroulement de ressort (5) et lesdits excentriques (4, 6) coopèrent l'un avec l'autre, de manière à exercer une force ascendante sur ledit piston (1) quand l'expansion à l'intérieur du cylindre (2) déplace le piston (1) vers le bas pour faire tourner le vilebrequin.
